# EUROPEAN PATENT APPLICATION

(11) **EP 4 732 975 A1**
(43) Date of publication of application: **29.04.2026**
(21) Application number: 25210243.9
(22) Date of filing: 22.10.2025
(51) Int. Cl.: B23B 51/06

(54) **BODY AND CUTTING TOOL**

(30) Priority: 23.10.2024 JP 2024186806
(71) Applicant: Tungaloy Corporation, Iwaki-shi, Fukushima 970-1144 (JP)
(72) Inventor: SASAKI, Yasutake, Fukushima 970-1144 (JP); SAJI, Ryuichi, Fukushima 970-1144 (JP); SASAKI, Ryou, Fukushima 970-1144 (JP)
(74) Representative: Vossius & Partner Patentanwälte Rechtsanwälte mbB

(57) **Abstract**

Body 10 of a cutting tool 1 that machines a workpiece with a leading end cutting edge 81 arranged on a leading end side and a peripheral cutting edge 82 arranged on an outer periphery side, the body comprising: a first coolant flow path 60 that is provided inside the body so as to extend from a base end toward a leading end; and a groove-like second coolant flow path 90 that is provided on an outer periphery of the body so as to extend along a central axis 10A.

## Description

### Background

### Field

The present invention relates to a body and a cutting tool.

### Description of Related Art

A composite tool having a leading end cutting edge and a peripheral cutting edge has conventionally been known, and such composite tool is capable of performing both drilling by using the leading end cutting edge and inner-diameter and outer-diameter turning by using the peripheral cutting edge.

As a cutting tool of the above-described type, Japanese Patent No. 7449504 discloses a cutting tool having a coolant flow path inside the tool, through which coolant is discharged near the cutting edges and toward the leading end side of the tool to thereby improve chip control and extend tool life.

Japanese Patent No. 7535254 discloses a cutting tool having a plurality of groove-like coolant flow paths, which are intended to supply coolant toward a leading end part of the tool, on an outer periphery of a shank part to be attached to a sleeve that is mountable on a machine tool.

Meanwhile, since the cutting tool having the leading end cutting edge and the peripheral cutting edge also performs drilling machining, such cutting tool has a chip discharge groove, called a "flute," which is formed continuously from the cutting edge to a rear end of the tool. Therefore, there are limits to providing a coolant flow path having a large cross-sectional area inside the tool to internally supply a large amount of coolant to the leading end of the tool. In addition, in the case of externally supplying the coolant from the outside of the cutting tool, it is desirable that a sufficient amount of coolant is supplied from a gap between a machined hole and the outer periphery of the cutting tool to the leading end of the tool.

### Summary

The present invention has been made under the above-described circumstances, and an object of the present invention is to provide a body and a cutting tool capable of sending a sufficient amount of coolant to a leading end of the tool to thereby achieve smooth chip discharge, while achieving an extended tool life.

A body according to an aspect of the present invention is a body of a cutting tool, wherein the cutting tool machines a workpiece with a leading end cutting edge arranged on a leading end side and a peripheral cutting edge arranged on a peripheral side, the body comprising: a first coolant flow path that is provided inside the body so as to extend from a base end toward a leading end; and a groove-like second coolant flow path that is provided on an outer periphery of the body so as to extend along a central axis.

In the body having the above-described structure, coolant is supplied from the base end side into the first coolant flow path, whereby the coolant is smoothly sent through the first coolant flow path to a cutting location in a workpiece where cutting is performed by the leading end cutting edge and the peripheral cutting edge. In addition, by supplying coolant from the outside of the body so as to send the coolant to a gap between the outer periphery of the body and a machined hole, the coolant is smoothly sent through the groove-like second coolant flow path provided on the outer periphery of the body to the cutting location in the workpiece where cutting is performed by the leading end cutting edge and the peripheral cutting edge.

In this way, the body of the cutting tool according to the present invention is capable of sending a sufficient amount of coolant to the cutting location at the leading end of the tool, by means of internal supply through the first coolant flow path or by means of external supply through the second coolant flow path, to thereby achieve smooth chip discharge, while achieving an extended tool life.

Here, in the case where external supply is performed by supplying coolant from the outside of the body, it has conventionally been possible to send the coolant only from a narrow gap between the outer periphery of the body and the inner periphery of a machined hole. In this regard, since the body of the cutting tool according to the present invention has the groove-like second coolant flow path on the outer periphery of the body, the externally supplied coolant can smoothly enter the machined hole from the second coolant flow path, which makes it possible to send a larger amount of coolant to the cutting location.

A base end-side portion of the body may serve as a holding part fitted into and attached to a cylindrical sleeve, and the second coolant flow path may not be provided in the holding part.

A thickness of a thinnest portion between a peripheral surface of the body and the first coolant flow path may be equal to or larger than a predetermined dimension.

A cutting tool according to an aspect of the present invention comprises: the body having the above-described configuration; and a cutting insert that has the leading end cutting edge and the peripheral cutting edge, the cutting insert being mounted on the body.

The second coolant flow path may be arranged at a circumferentially corresponding position to a discharge hole which is formed in the sleeve to discharge a coolant.

In a cutting tool according to an aspect of the present invention, the leading end cutting edge and the peripheral cutting edge are provided in an integrated manner on a leading end part of the body having the above-described configuration. The second coolant flow path may be arranged at a circumferentially corresponding position to a discharge hole which is formed in the sleeve to discharge a coolant.

### Brief Description of Drawings

Fig. 1 is a perspective view showing a cutting tool according to an embodiment of the present invention.
Fig. 2 is a diagram (plan view) showing the cutting tool as viewed from one side in a direction perpendicular to a central axis and along a screw hole provided in an insert pocket.
Fig. 3 is a diagram (side view) showing the cutting tool as viewed from one side in a direction perpendicular to the central axis and perpendicular to the screw hole provided in the insert pocket.
Fig. 4 is a diagram (side view) showing the cutting tool as viewed from the other side in the direction perpendicular to the central axis and perpendicular to the screw hole provided in the insert pocket.
Fig. 5 is a diagram (back side view) showing the cutting tool as viewed from the other side in the direction perpendicular to the central axis and along the screw hole provided in the insert pocket.
Fig. 6 is a diagram showing the cutting tool as viewed along the central axis from a leading end side of a body.
Fig. 7 is a perspective view of the body.
Fig. 8 is a diagram showing the body as viewed along the central axis from the leading end side thereof.
Fig. 9 is a perspective view of the body with its internal structure shown in a transparent manner.
Fig. 10 is a cross-sectional view taken along line X-X in Fig. 7.
Fig. 11 is a perspective view showing a cutting tool attached to a sleeve.
Fig. 12 is a diagram showing the cutting tool attached to the sleeve, as viewed from a leading end side thereof.
Fig. 13 is a perspective view showing a cutting tool attached to a sleeve having discharge holes.
Fig. 14 is a diagram showing the cutting tool attached to the sleeve having discharge holes, as viewed from the leading end side thereof.

### Detailed Description

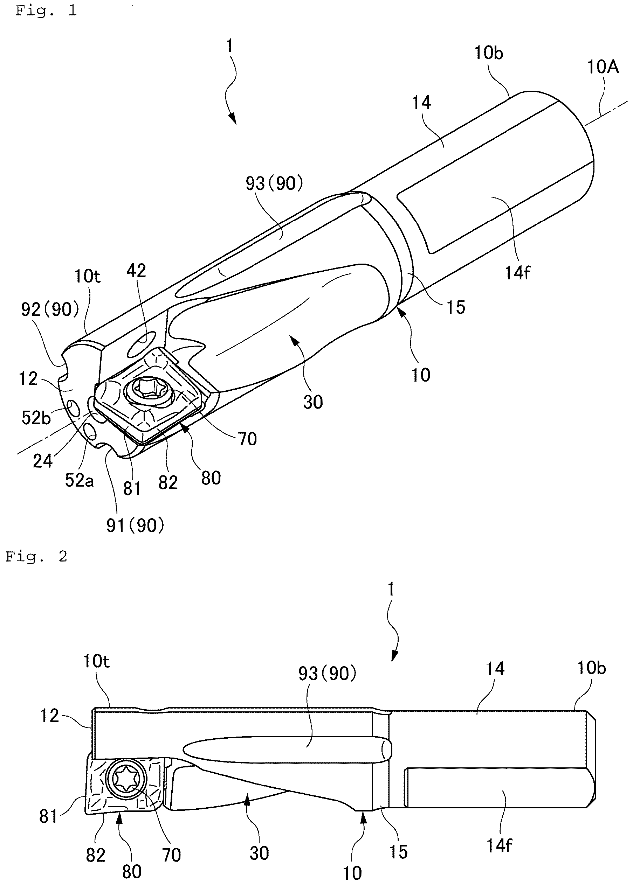

Preferred embodiments of a body and a cutting tool according to the present embodiment will now be described below with reference to the attached drawings (see Figs. 1-14).

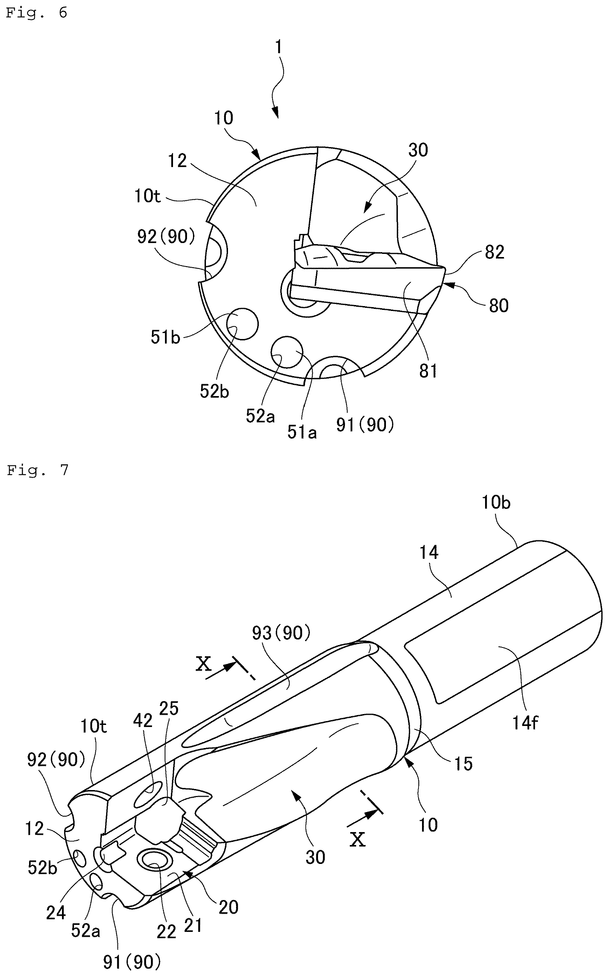

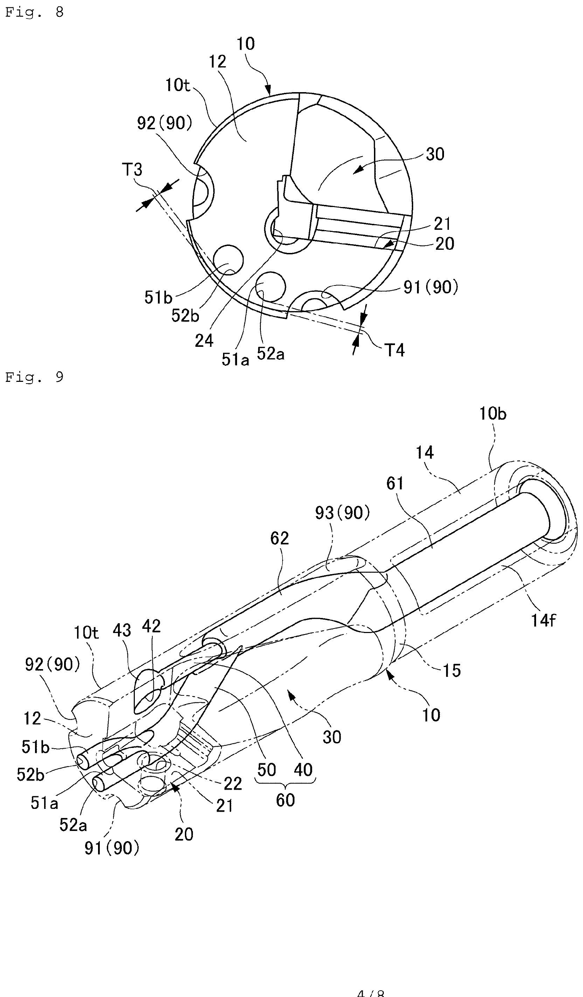

A cutting tool 1 according to the present embodiment is formed as a multifunctional tool (a composite tool for drilling and turning machining) that is capable of performing both drilling machining and inner-diameter and outer-diameter turning machining. A body 10 (which may be referred to as a "holder" where applicable) of such cutting tool 1 is provided with an insert pocket (insert mounting seat) 20, a chip discharge groove 30, a first coolant flow path 60 (cutting edge cooling flow path 40, chip discharge flow path 50), and a second coolant flow path 90 (oil supply grooves 91, 92, 93) (see Figs. 7, 9, etc.). The body 10 is formed in a substantially cylindrical shape extending from a base end part 10b to a leading end part 10t along a central axis 10A (see Fig. 1, etc.).

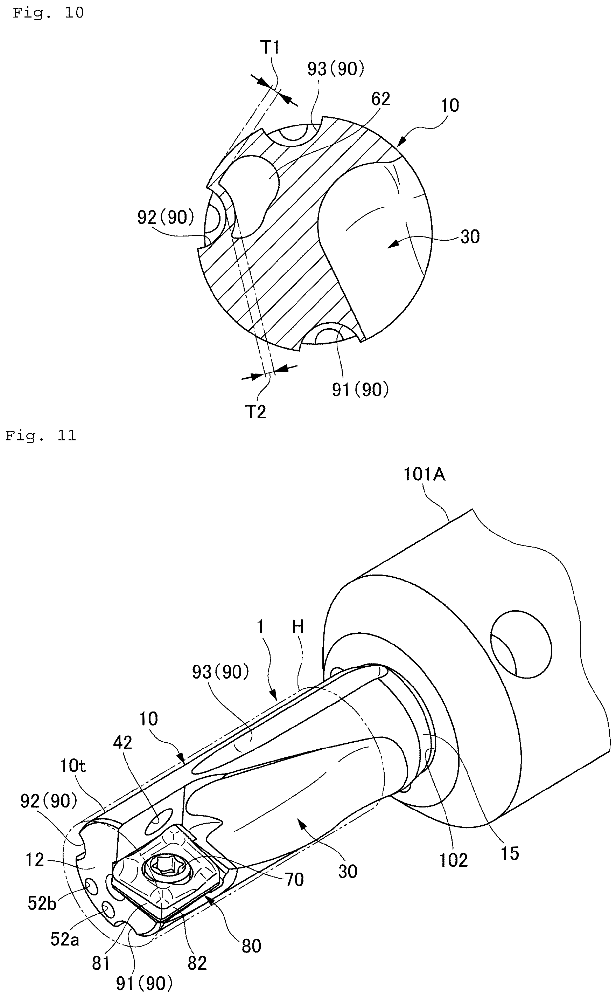

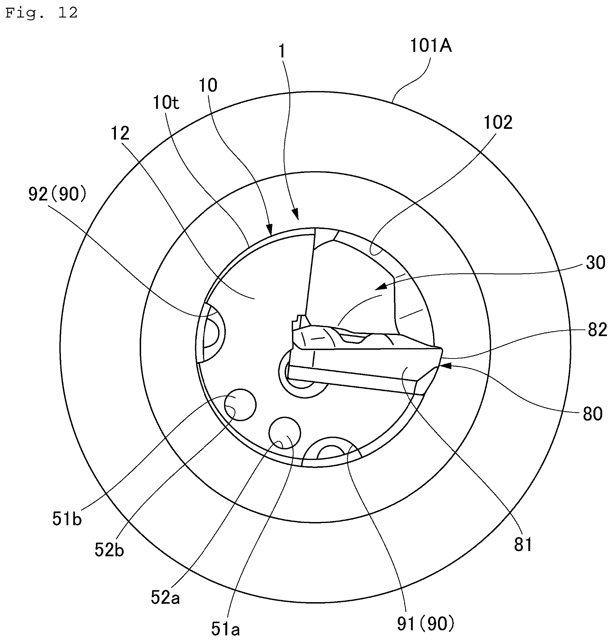

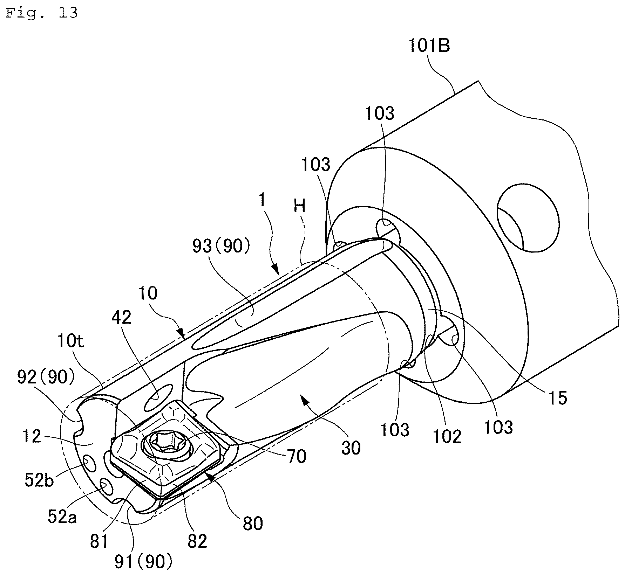

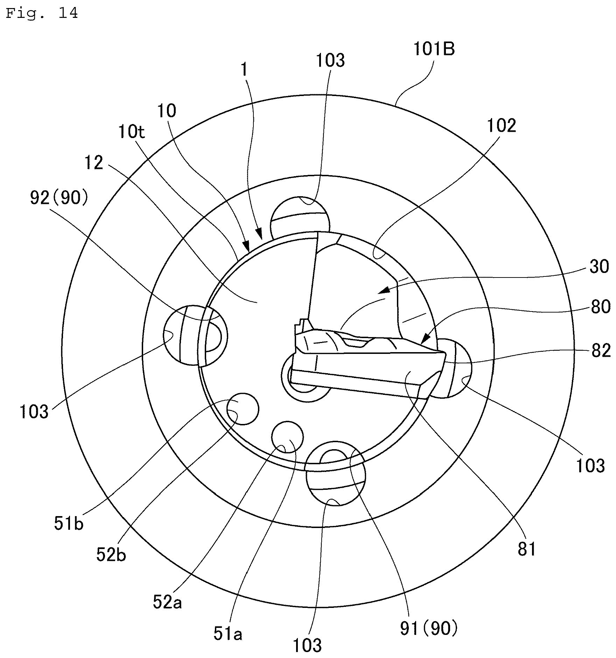

A shank part (holding part) 14 is provided on the base end part 10b side of the body 10 (see Figs. 1, 7, etc.). The shank part 14 is a portion of the body 10 which is attached to a sleeve 101A (see Figs. 11 and 12) or to a sleeve 101B having discharge holes (see Figs. 13 and 14), the sleeves 101A, 101B being mountable on a machine tool. This shank part 14 has a substantially cylindrical shape, and a cutout 14f is formed in a part of the shank part 14, with the cutout 14f functioning as an anti-rotation part with respect to the sleeve 101A, 101B. The cutout 14f may be a flat surface that is parallel to the central axis 10A (see Figs. 1, 7, etc.). The shank part 14 in the body 10 of the present embodiment is a portion whose outer diameter is smaller than the outer diameter of the other part (e.g., the distal end part 10t) of the body 10, and is the smallest in the body 10. A step part 15 is formed between the shank part 14 and a portion of the body 10 which is located on the leading end part 10t side with respect to such shank part 14, and the outer diameter of the body 10 suddenly changes at the step part 15 (see Figs. 1, 7, etc.).

The insert pocket 20 functions as an insert mounting seat on which the cutting insert 80 is mounted. The insert pocket 20 is formed on the leading end part 10t along the central axis 10A of the body 10 (see Figs. 7, 8, etc.). A seat surface 21 of the insert pocket 20 is provided with a screw hole (fastening portion) 22 into which an insert mounting screw 70 is screwed.

The cutting insert 80 is formed in a substantially rectangular shape in a plan view. The cutting insert 80 has a leading end cutting edge 81 and a peripheral cutting edge 82 on each of a pair of corner parts arranged at diagonal positions (see Figs. 1, 2, etc.)

The cutting insert 80 is arranged on the insert pocket 20, with one corner part having the leading end cutting edge 81 and the peripheral cutting edge 82, which are to be used for cutting, being arranged on the outer periphery side at the leading end of the body 10, and fastened and fixed by screwing the insert mounting screw 70 into the screw hole 22. As a result, the leading end cutting edge 81 which performs drilling machining is arranged on the leading end side of the body 10, and the peripheral cutting edge 82 that performs inner-diameter and outer-diameter turning machining is arranged on the outer periphery side of the body 10.

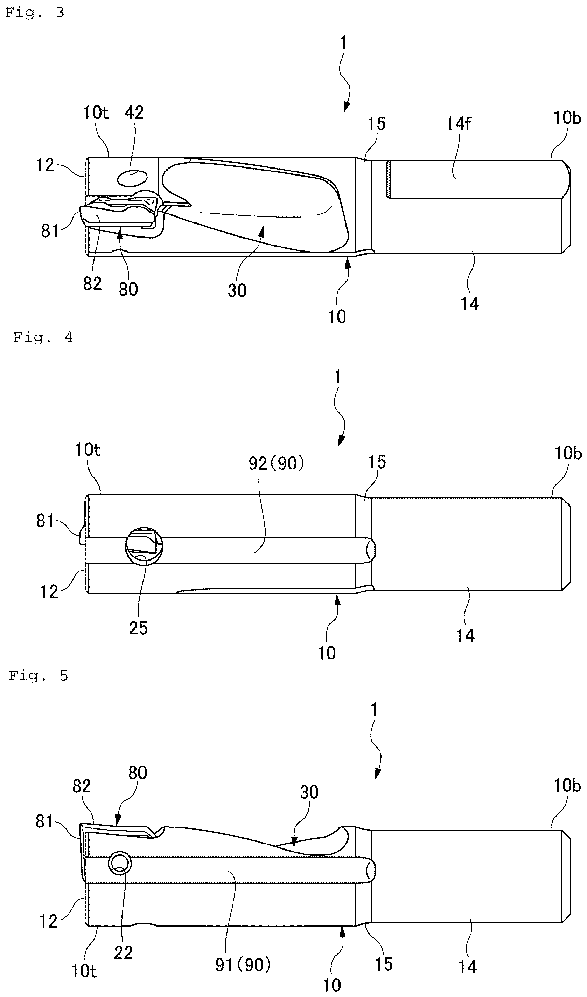

The body 10 has a clearance part 24 at a corner of the insert pocket 20 so as to avoid contact with an intersecting edge between a bottom surface and a side surface of the cutting insert 80 (see Figs. 1, 7, etc.). In addition, the body 10 is also provided with a clearance hole 25 so as to avoid contact with the other corner part having the leading end cutting edge 81 and the peripheral cutting edge 82 that are not currently being used for cutting, when the cutting insert 80 is mounted in the insert pocket 20 (see Fig. 4, etc.).

In this way, the cutting insert 80 having the leading end cutting edge 81 and the peripheral cutting edge 82 is mounted in the insert pocket 20 in the cutting tool 1 according to the present embodiment. However, this is merely a preferred example, and the cutting tool 1 may have the leading end cutting edge 81 and the peripheral cutting edge 82 that are formed on, and in an integrated manner with, the leading end part 10t of the body 10, or the cutting tool 1 may employ a brazed tool in which a cutting insert having the leading end cutting edge 81 and the peripheral cutting edge 82 is brazed thereto, although such configurations are not particularly shown in the drawings.

The chip discharge groove 30 (which may be referred to as a flute or a pocket, where applicable) is constituted by a recess formed so as to extend from the insert pocket 20 toward the base end part 10b of the body 10. The chip discharge groove 30 in the cutting tool 1 of the present embodiment is formed as a groove part that guides and discharges chips produced as a result of drilling machining (see Figs. 1, 7, etc.).

The first coolant flow path 60 is provided inside the body 10 (see Fig. 9). The first coolant flow path 60 has a cutting edge cooling flow path 40 and a chip discharge flow path 50. The first coolant flow path 60 has a supply path 61 and an introduction path 62.

The supply path 61 is provided along the central axis 10A on the base end part 10b side in the body 10. The introduction path 62 extends from an end of the supply path 61, which is located on the leading end part 10t side, so as to be curved outwardly in the radial direction of the body 10, and extends further toward the leading end part 10t of the body 10. Each of the cutting edge cooling flow path 40 and the chip discharge flow path 50 are branched at an end of the introduction path 62 which is located on the leading end 10t side (see Fig. 9).

The cutting edge cooling flow path 40 is formed as a flow path for supplying coolant that is intended to mainly cool the leading end cutting edge 81 and the peripheral cutting edge 82 of the cutting insert 80. The cutting edge cooling flow path 40 has a discharge port 42, and this discharge port 42 is provided at a position suitable for discharging the coolant toward the leading end cutting edge 81 and the peripheral cutting edge 82 of the cutting insert 80, such as at a position near the insert pocket 20 (more specifically, a position near a portion of the insert pocket 20 which is located on the base end part 10b side, where a portion of the discharge port 42 is overlapped with the insert pocket 20) (see Figs. 1, 9, etc.). The discharge port 42 may have a circular shape or a non-circular shape which easily secures the stiffness of a portion around the discharge port 42.

The cutting edge cooling flow path 40 branched from the introduction path 62 may be formed substantially linearly toward the leading end part 10t or non-linearly so as to be curved in the middle thereof. The cutting edge cooling flow path 40 in the cutting tool 1 of the present embodiment is formed so as to extend substantially linearly from the branch point in the introduction path 62 toward the leading end part 10t of the body 10, and be curved inwardly in the radial direction of the body 10 at a curved portion 43 which is provided immediately before the discharge port 42 (see Fig. 6.).

The chip discharge flow path 50 is formed as a flow path for supplying coolant in order to mainly improve the chip discharge performance during cutting. The chip discharge flow path 50 extends from the branch point in the introduction path 62, in a direction away from the cutting edge cooling flow path 40, and extends along the outer periphery of the body 10 toward the leading end part 10t (see Fig. 9). The chip discharge flow path 50 branches into two discharge flow paths 51a and 51b at the leading end part 10t of the body 10. The discharge flow paths 51a and 51b have discharge ports 52a and 52b, respectively, and such discharges ports 52a and 52b are provided in a leading end surface 12 of the body 10, which is suitable for improving the chip discharge performance (see Figs. 1, 9, etc.).

Meanwhile, in the body 10, the thickness between the peripheral surface and the first coolant flow path 60 is set to a predetermined dimension or more. For example, in a section where the introduction path 62 of the first coolant flow path 60 passing through the vicinity of the peripheral surface of the body 10 is formed, a thickness T1 of the thinnest portion between the peripheral surface of the body 10 and the introduction path 62, and a thickness T2 of the thinnest portion between the oil supply groove 92 of the second coolant flow path 90 (to be described later), which constitutes the peripheral surface of the body 10, and the introduction path 62, are each set to a predetermined dimension or larger (see Fig. 10). In the same way, in a section where the discharge flow paths 51a, 51b of the first coolant flow path 60 pass through the vicinity of the peripheral surface of the body 10, thicknesses T3 and T4 of the respective thinnest portions between the peripheral surface of the body 10 and the discharge flow paths 51a and 51b, are each set to a predetermined dimension or larger (see Fig. 8). In this way, by setting the thickness between the peripheral surface of the body 10 and the first coolant flow path 60 so as to be a predetermined dimension or larger, it is possible to secure a large cross-sectional area of the first coolant flow path 60, while preventing a reduction in the strength, to thereby supply more coolant through the first coolant flow path 60 to a cutting location. The predetermined dimension of the thickness is preferably 0.3 mm.

In the first coolant flow path 60, the introduction path 62 has a smaller cross-sectional area than the supply path 61, and the cutting edge cooling flow path 40 and the chip discharge flow path 50 have a smaller cross-sectional area than the introduction path 62 (see Fig. 9). Although the specific shape of the configuration extending from the supply path 61 to the discharge ports 42, 52a, 52b is not particularly limited, it is preferable for the first coolant flow path 60 of the present embodiment to have a shape in which a flow path cross-sectional area of at least a portion of such first coolant flow path 60 gradually decreases from the supply path 61 toward the discharge ports 42, 52a, 52b. In such case, the first coolant flow path 60 does not include a portion in which the cross-sectional area suddenly decreases. In the first coolant flow path 60 which does not include a portion in which the cross-sectional area suddenly decreases and instead has a portion in which the flow path cross-sectional area gradually decreases, a pressure loss which occurs when the coolant flows in such first coolant flow path 60 is relatively small; therefore, it is possible to suppress wear of the cutting insert 80 by supplying the coolant toward the leading end part 10t more efficiently and increasing the flow rate of the coolant in the middle of its supply to efficiently perform cooling and chip discharge.

The second coolant flow path 90 is formed on the outer periphery of the body 10 so as to supply coolant toward the leading end part 10t of the body 10. The second coolant flow path 90 in the body 10 of the present embodiment is provided in a portion of the outer periphery of the body 10, other than an outer peripheral portion of the shank part 14. In other words, the second coolant flow path 90 is not provided in the shank part 14 that is fitted into and thereby attached to the sleeves 101A, 101B (see Figs. 1, 7, etc.).

The second coolant flow path 90 is constituted by three oil supply grooves 91, 92, 93 (see Figs. 1, 2, 4, 5, etc.). A base end part 10b-side end of each of the oil supply grooves 91, 92, 93 constituting the second coolant flow path 90 is located on a portion of the body 10 where the step part 15 is located (Fig. 1, 2, 4, 5, etc.). A leading end part 10t-side end of two oil supply grooves 91, 92, from among the oil supply grooves 91, 92, 93, reach the leading end surface 12 of the body 10 (see Figs. 1, 8, etc.). These oil supply grooves 91, 92 are arranged on both sides of the discharge ports 52a, 52b of the chip discharge flow path 50 of the first coolant flow path 60, as viewed from the leading end side of the body 10 (see Figs. 1, 8, etc.). In addition, a leading end part 10t-side end of one oil supply groove 93, from among the oil supply grooves 91, 92, 93, reaches near the insert pocket 20 (see Figs. 1, 7, etc.).

The oil supply grooves 91, 92, 93 that constitute the second coolant flow path 90 may be configured as grooves having a shape whose cross-section is curved in an arc-like form as in, for example, the present embodiment (see Fig. 10, etc.), or grooves having other shapes. Such oil supply grooves 91, 92, 93 are formed so as to extend straight along, and parallel to, the central axis 10A of the body 10 (see Figs. 1, 2, 4, 5, etc.)

The cutting tool 1 is mounted on a machine tool, by attaching the shank part 14 which is located on the base end part 10b side of the body 10 to the sleeve 101A (see Figs. 11 and 12). The cutting tool 1 is mounted on a machine tool, by attaching the shank part 14 which is located on the base end part 10b side of the body 10 to the sleeve 101B having discharge holes (see Figs. 13 and 14). These sleeves 101A, 101B are formed in a cylindrical shape having a mounting hole 102, and the mounting hole 102 serves as a communication path through which coolant can be supplied from the machine tool side toward the cutting tool 1. The sleeve 101B with discharge holes has four discharged holes 103 in an inner periphery of the mounting hole 102, the four discharge holes 103 being arranged in a circumferential direction with a space therebetween (see Figs. 13 and 14). When the cutting tool 1 is mounted in such sleeve 101B with discharge holes, the oil supply grooves 91, 92, 93 constituting the second coolant flow path 90 of the body 10 are arranged at corresponding circumferential positions to three out of the four discharge holes 103 of the sleeve 101B (see Fig. 14). Accordingly, by mounting the cutting tool 1 in the sleeve 101B with discharge holes, the oil supply grooves 91, 92, 93 that constitute the second coolant flow path 90 of the body 10 are located respectively on extension lines that axially extend from the three discharge holes 103 of the sleeves 101B (see Figs. 13 and 14).

The cutting tool 1 having the above-described configuration is used by users under various conditions. Examples of such conditions may include: an external supply in which coolant is supplied from the outside of the body 10 of the cutting tool 1 to a gap between the outer periphery of the body 10 and a machined hole H of a workpiece; an internal supply in which coolant is supplied from the machine tool side through the mounting hole 102 of the sleeve 101A, 101B to the inside of the cutting tool 1; and a combined style where the external supply and the internal supply are performed simultaneously. The following description will now describe usage examples in the various supply styles.

(Supply Example by Means of Only External Supply) In the case of using only the external supply, the body 10 of the cutting tool 1 is attached to the sleeve 101A which has no discharge hole 103 and is then mounted on the machine tool (see Figs. 11 and 12). The coolant is supplied from the outside of the body 10 of the cutting tool 1 to a gap between the outer periphery of the body 10 and a machined hole H of a workpiece.

In the case of using only such external supply, the coolant is sent not only to the gap between the outer periphery of the body 10 and the inner periphery of the machined hole H of the workpiece, but also to a cutting location where cutting is performed by the leading end cutting edge 81 and the peripheral cutting edge 82, by way of the oil supply grooves 91, 92, 93 constituting the second coolant flow path 90 formed in the body 10.

Here, if the body 10 of the cutting tool 1 is not provided with the second coolant flow path 90, the coolant can only be sent from a narrow gap between the outer periphery of the body 10 and the inner periphery of the machined hole H. However, according to the cutting tool 1 which comprises the body 10 having the second coolant flow path 90, the externally supplied coolant is smoothly introduced from the second coolant flow path 90 into the machined hole H, which makes it possible to send a larger amount of coolant to the cutting location.

(Supply Example by Means of Only internal Supply) The internal supply in which the coolant is supplied into the first coolant flow path 60 of the body 10 of the cutting tool 1 includes internal supply employing the sleeve 101A with no discharge hole 103 (see Figs. 11 and 12) and internal supply employing the sleeve 101B having discharge holes 103 (see Figs. 13 and 14).

(1) Internal Supply Using Sleeve 101A with No Discharge Hole 103 In the case of using only internal supply by using the sleeve 101A with no discharge hole 103 (see Figs. 11 and 12), the coolant is supplied from the machine tool side through the mounting hole 102 of the sleeve 101A to the cutting tool 1. The coolant is then sent through the supply path 61 and the introduction path 62 that constitute the first coolant flow path 60 of the body 10 into the cutting edge cooling flow path 40 and the chip discharge flow path 50. The coolant that has been sent into the cutting edge cooling flow path 40 is discharged toward the cutting insert 80 from the discharge port 42 that opens near the cutting insert 80, and the coolant that has been sent into the chip discharge flow path 50 is divided into the two discharge flow paths 51a, 51b and sent to the cutting location from the discharge ports 52a, 52b.

Here, if the second coolant flow path 90 is formed in the shank part 14 of the body 10, the coolant supplied from the sleeve 101A into the first coolant flow path 60 might leak from the second coolant flow path 90, which might lower the supply pressure and degrade chip discharge.

On the other hand, the second coolant flow path 90 of the present embodiment is provided in a portion of the outer periphery of the body 10, which is other than the outer peripheral part of the shank 14. In other words, the second coolant flow path 90 is not provided in the shank part 14 which is attached to the sleeve 101A. Accordingly, when the coolant is supplied from the sleeve 101A to the first coolant flow path 60, it is possible to prevent the supply pressure of the coolant from being lowered which would be caused by leakage of the coolant from the second coolant flow path 90. Such configuration makes it possible to smoothly send the coolant through the first coolant flow path 60 and smoothly discharge chips.

(2) Internal Supply Using Sleeve 101B Having Discharge Holes 103 In the case of using only internal supply by using the sleeve 101B having the discharge holes 103 (see Figs. 13 and 14), the coolant is supplied from the machine tool side through the mounting hole 102 of the sleeve 101B to the cutting tool 1. As a result, the coolant is sent through the supply path 61 and the introduction path 62 that constitute the first coolant flow path 60 of the body 10 into the cutting edge cooling flow path 40 and the chip discharge flow path 50. The coolant that has been sent into the cutting edge cooling flow path 40 is discharged toward the cutting insert 80 from the discharge port 42 that opens near the cutting insert 80, and the coolant that has been sent into the chip discharge flow path 50 is divided into the two discharge flow paths 51a, 51b and sent to the cutting location from the discharge ports 52a, 52b.

A part of the coolant that is supplied from the machine tool side through the mounting hole 102 of the sleeve 101B is discharged from the discharge holes 103 of the sleeve 101B toward the leading end part 10t of the body 10 of the cutting tool 1. As a result, such coolant flows into the oil supply grooves 91, 92, 93 constituting the second coolant flow path 90 that are arranged at the corresponding circumferential positions to the discharge holes 103, without being repelled by the body 10. Consequently, the coolant discharged from the discharge holes 103 can be smoothly sent through the oil supply grooves 91, 92, 93 of the second coolant flow path 90 into the cutting location.

(Supply Example by Means of External Supply and Internal Supply) In the case of supply by means of external supply and internal supply, the body 10 of the cutting tool 1 is attached to the sleeve 101A with no discharge hole 103 and is then mounted on the machine tool (see Figs. 11 and 12). Coolant is supplied from the outside of the body 10 of the cutting tool 1 to the gap between the outer periphery of the body 10 and the machined hole H of the workpiece, and coolant is also supplied from the machine tool side through the mounting hole 102 of the sleeve 101A to the cutting tool 1.

As a result, the coolant that has been supplied from the outside of the body 10 of the cutting tool 1 to the gap between the outer periphery of the body 10 and the machined hole H of the workpiece is sent not only to the gap between the outer periphery of the body 10 and the inner periphery of the machined hole H, but also to the cutting location of the workpiece, where the cutting is performed by the leading end cutting edge 81 and the peripheral cutting edge 82, by way of the oil supply grooves 91, 92, 93 constituting the second coolant flow path 90 formed in the body 10. In addition, the coolant that has been supplied from the machine tool side through the mounting hole 102 of the sleeve 101A to the cutting tool 1 passes through the supply path 61 and the introduction path 62 that constitute the first coolant flow path 60 of the body 10, and is then discharged from the discharge port 42 of the cutting edge cooling flow path 40 and the discharge ports 52a, 52b of the chip discharge flow path 50 and sent to the cutting insert 80 and the cutting location. In this way, in the cutting tool 1, a sufficient amount of coolant can be sent to the cutting location at the leading end of the tool by means of external supply and the internal supply.

It should be noted that, if the liquid pressure in the cutting location becomes high due to the internally supplied coolant, it becomes difficult for the externally supplied coolant to be sent to the leading end of the tool. Therefore, when the coolant is supplied by means of the external supply and the internal supply, it is preferable for the liquid pressure of the internally-supplied coolant to be suppressed, so that the externally-supplied coolant can be smoothly sent to the leading end of the tool.

According to the body 10 and the cutting tool 1 of the present embodiment which have been described above, it is possible to send a sufficient amount of coolant to the cutting location at the leading end of the tool by means of the internal supply through the first coolant flow path 60 and the external supply through the second coolant flow path 90, and thereby achieve smooth chip discharge while achieving an extended tool life.

The present disclosure is not limited to the specific examples described above, and design modifications that would be made to these specific examples by a person skilled in the art are also encompassed in the scope of the present disclosure, as long as they comprise features of the present disclosure. The arrangement, conditions, and shape of the elements included in each of the specific examples are not limited to those illustrated in the specific examples, and they may be changed as appropriate. In addition, the elements included in each of the above-described specific examples may be combined in different ways, unless such combination causes any technical contradiction.

The present invention provides a body and a cutting tool capable of sending a sufficient amount of coolant to a leading end of the tool to thereby achieve smooth chip discharge, while achieving an extended tool life.

## Claims

1. A body of a cutting tool, wherein the cutting tool machines a workpiece with a leading end cutting edge arranged on a leading end side and a peripheral cutting edge arranged on a peripheral side, the body comprising:
a first coolant flow path that is provided inside the body so as to extend from a base end toward a leading end; and
a groove-like second coolant flow path that is provided on an outer periphery of the body so as to extend along a central axis.

2. The body according to claim 1, wherein:
a base end-side portion of the body serves as a holding part fitted into and attached to a cylindrical sleeve; and
the second coolant flow path is not provided in the holding part.

3. The body according to claim 1 or 2, wherein a thickness of a thinnest portion between a peripheral surface of the body and the first coolant flow path is equal to or larger than a predetermined dimension.

4. A cutting tool, comprising:
the body according to any one of claims 1 to 3; and
a cutting insert that has the leading end cutting edge and the peripheral cutting edge, the cutting insert being mounted on the body.

5. The cutting tool according to any one of claims 1 to 4, wherein the second coolant flow path is arranged at a circumferentially corresponding position to a discharge hole which is formed in the sleeve to discharge a coolant.

6. A cutting tool, wherein the leading end cutting edge and the peripheral cutting edge are provided in an integrated manner on a leading end part of the body according to any one of claims 1 to 3.

7. The cutting tool according to claim 6, wherein the second coolant flow path is arranged at a circumferentially corresponding position to a discharge hole which is formed in the sleeve to discharge a coolant.
